# EUROPEAN PATENT APPLICATION

(11) **EP 1 239 682 A1**
(43) Date of publication of application: **11.09.2002**
(21) Application number: 01103324.8
(22) Date of filing: 13.02.2001
(51) Int. Cl.: H04N 9/82

(54) **Recording medium reproducing apparatus**

(71) Applicant: Venture Union Inc., Tokyo (JP)
(72) Inventor: Kono, Kentaro, 1-8-3 Tomigaya, Shibuya-ku, Tokyo (JP)
(74) Representative: Lieke, Winfried, Dr.

(57) **Abstract**

In a recording medium reproducing apparatus (1) for reproducing moving image information which includes a recording medium (8) on which the moving image information composed of image data that is at least continuous in time sequence is recorded, a reading device (2) for reading out at least the image data from the recording medium (8), an image creation device (3) for creating a reproduced image based on the image data, and a display device (6) for displaying the thus created image, the image data is composed of at least two kinds of image data each kind of which corresponds to one image including at least display contents that are displayed in a large region on the display device (6) and display contents that are displayed in small regions on the display device (6), the display contents that are displayed in a small region in a kind of image data and displayed in the large region in another kind of image data have the same time series, and at least the two kinds of the image data are switched by switch means (7) so as to be displayed on the display device (6). With this construction, the recording medium reproducing apparatus can be provide at a less expensive cost which can reproduce a plurality of moving image information having the same time series in one image while appropriately changing the size of areas where the information is reproduced.

## Description

### BACKGROUND OF THE INVENTION

### 1. Field of the Invention

The present invention relates to a recording medium reproducing apparatus such as a DVD and the like capable of reproducing moving image information.

### 2. Description of the Related Art

Hitherto, a recording medium reproducing apparatus for reading and reproducing moving image information from a recording medium such as a laser disc, a video tape and the like, on which the moving image information can be recorded, by means of analog signals or digital signals is known.

Recently, moving image information (contents) of higher quality can be presented to a user by the improvement of an image digital processing technology, in particular, the improvement of an image compression technology and the improvement of the recording density of a recording medium represented by the DVD.

When a plurality of images, for example, the images of a combative sport match, and the like which can be reproduced from the same recording medium such as the DVD and the like are presented as a presentation of the moving image information (contents) of high quality, a trial is made to present the moving image information (contents) of high quality having a higher degree of a sense of realismby simultaneously reproducing images recorded from a plurality of points of view in the areas having a different size on the same screen and by permitting a user to select an image recorded from a point of view he or she desires so that the image is reproduced in a large area.

However, in order to reproduce the plurality of moving images having the same time series in the areas having a different size on the same screen, it is necessary to reproduce the plurality of moving images, that is, to read the moving image information (data or signal) and to create an image based on the thus read read moving image information as to each moving image and then to combine the thus created images on the same screen and to display them on the same screen. For this purpose, the moving image information must be read and the images must be created at a very high speed which is in proportion to the number of images to be reproduced as compared with an ordinary reproducing speed. Otherwise, the images must be created in parallel with each other by providing a plurality of moving image information reading devices and image creating devices (LSIs). Thus, a problem arises in that the cost of the recording medium reproducing apparatus is greatly increased because the reading speed of the moving image information reading device and the processing speed of the image creating device (LSI) must be increased or a plurality of sets of the respective devices must be provided.

### SUMMARY OF THE INVENTION

Accordingly, it is an object of the present invention, which was made in view of the above problem, to provide a recording medium reproducing apparatus capable of reproducing a plurality of moving image information having the same time series as described above on the same screen while appropriately changing the size of the reproducing areas of the screen.

To solve the above problem, in a recording medium reproducing apparatus of the present invention for reproducing moving image information which includes a recording medium on which the moving image information composed of image data that is at least continuous in time sequence is recorded, a reading device for reading out at least the image data from the recording medium, an image creation device for creating a reproduced image based on the image data, and a display device for displaying the thus created image, the image data is composed of at least two kinds of image data each kind of which corresponds to one image including at least display contents that are displayed in a large region on the display device and display contents that are displayed in small regions on the display device, the display contents that are displayed in a small region in a kind of image data and displayed in the large region in another kind of image data have the same time series, and at least the two kinds of the image data are switched by switch means so as to be displayed on the display device.

According to the above-mentioned feature of the recording medium reproducing apparatus of the present invention, each of a plurality of kinds of image data for one image that is displayed on the display device is previously arranged as image data including display contents to be displayed in the large region of the display device and display contents to be displayed in the small regions thereof. Further, the display contents that are displayed in a small region in a kind of image data and displayed in the large region in another kind of image data have the same time series on the recording medium on which they are recorded. Therefore, the display area of an image can changed from a small region to the large region in response to, for example, the selection of the user only by reading the image data corresponding to the image and ordinarily creating and reproducing the image from the thus read image data. As a result, the recording medium reproducing apparatus having these functions can be provided at the less expensive cost without increasing the processing speeds of the moving image information reading device and the image creating device (LSI) and without providing a plurality of sets of these devices.

In a recording medium reproducing apparatus of the present invention, it is preferable that the switch device select the position where display contents are displayed in a small region on the display device so as to switch the image data of the display contents at the selected position to the image data of the display contents that is to be displayed in the large region.
With this operation, operability can be improved when the user selects an image which he or she desires to display in the large region.

In a recording medium reproducing apparatus of the present invention, it is preferable that time series data be added to the leading end of each kind of the image data.

With is arrangement, when image data to be read is switched, the occurrence a time lag can be avoided in image reproduction by specifying image data to which time series data corresponding to the image data to be reproduced is added.

In a recording medium reproducing apparatus of the present invention, it is preferable that the display contents in the respective regions be images of the same subject recorded at a different angle or from a different point of view.

With this arrangement, an image having a higher degree of a sense of realism can be presented to the user.

### BRIEF DESCRIPTION OF THE DRAWINGS

Fig. 1 is a perspective view showing the outside appearance of a DVD player acting as a recording medium reproducing apparatus of an embodiment of the present invention;
Fig. 2 is a block diagram showing the DVD player as the recording medium reproducing apparatus of the embodiment of the present invention;
Fig. 3 is a view showing a corresponding relationship between the display areas of displayed images and the display contents on the display screen of the DVD player of the embodiment of the present invention;
Fig. 4 is a view showing how displayed images are changed in response to an image selection input in the DVD player of the embodiment of the present invention; and
Fig. 5 is a view showing how image data is recorded on a DVD disc acting as a recording medium of the embodiment of the present invention.

### DESCRIPTION OF THE PREFERRED EMBODIMENTS

An embodiment of the present invention will be described below with reference to the accompanying drawings.

### (Embodiment)

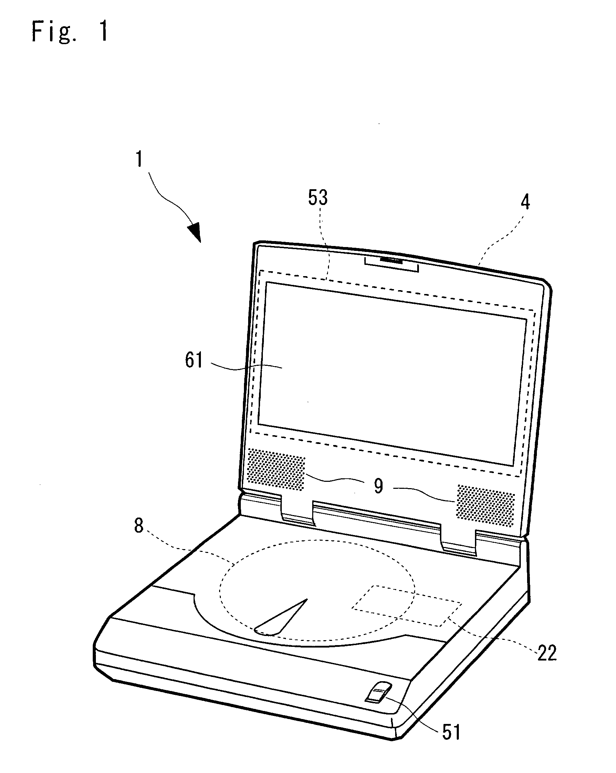

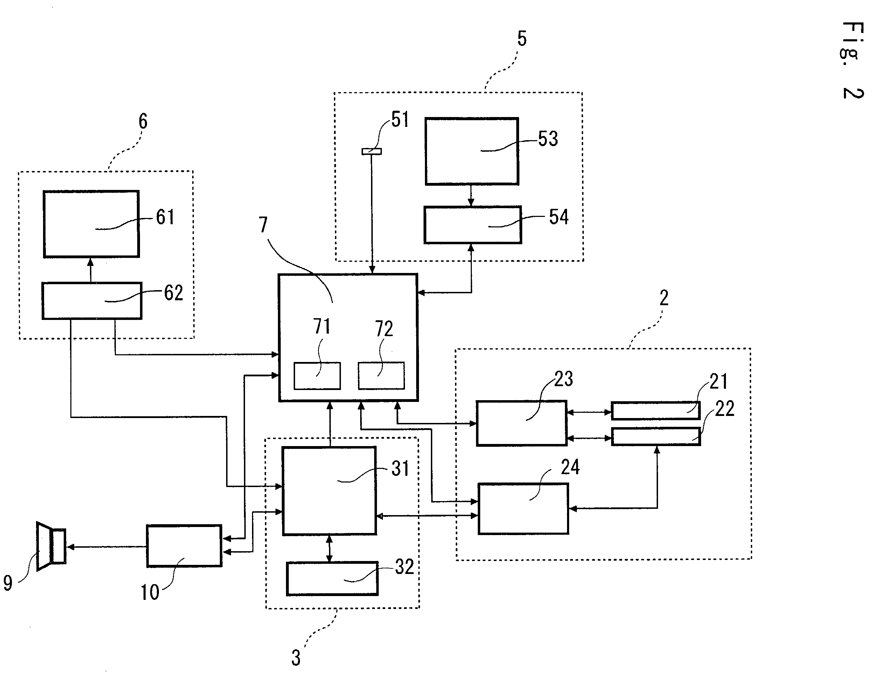

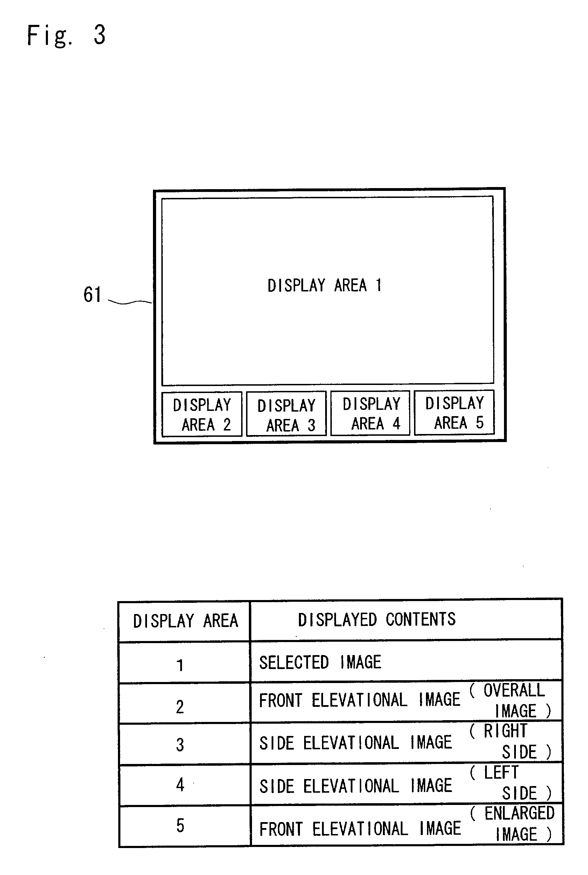

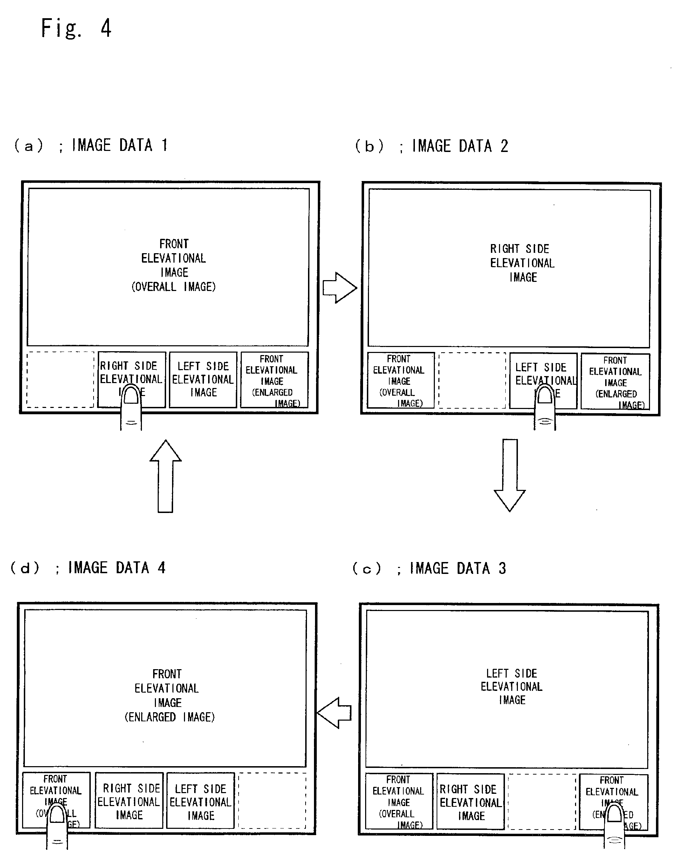

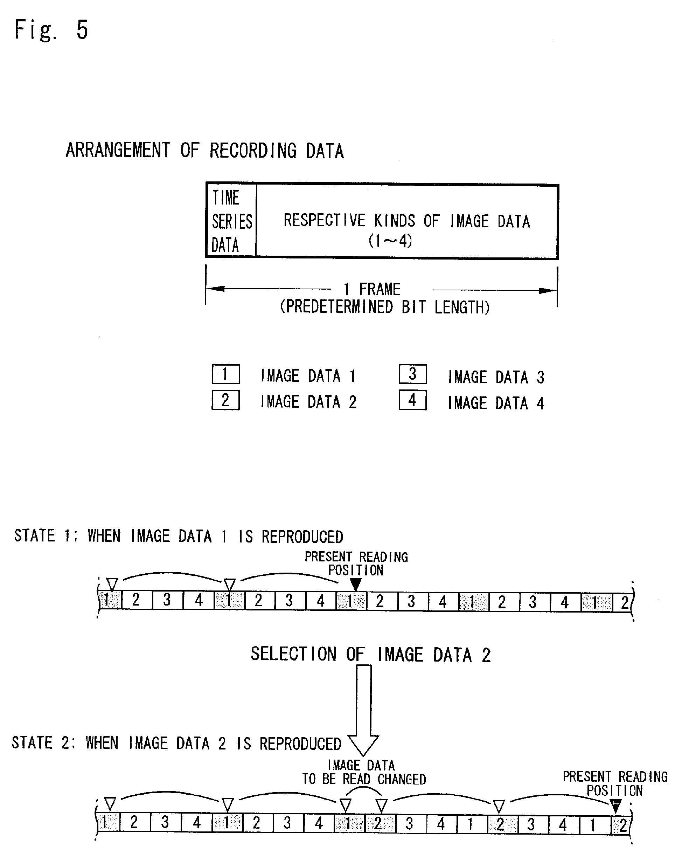

Fig. 1 is a perspective view showing the outside appearance of a DVD player acting as a recording medium reproducing apparatus of the embodiment, Fig. 2 is a block diagram showing the construction of the DVD player acting as the recording medium reproducing apparatus of the embodiment, Fig. 3 is a view showing a corresponding relationship between the display areas of displayed images and the display contents on the display screen of the DVD player of the embodiment, Fig. 4 is a view showing how displayed images are changed in response to an image selection input in the DVD player of the embodiment, and Fig. 5 is a view showing how image data is recorded on a DVD disc acting as a recording medium of the embodiment.

First, as shown in Fig. 1, the DVD player 1 acting as the recording medium reproducing apparatus used in the embodiment is arranged as a portable DVD player including a lid portion 4 which is mounted on a main body so as to be opened and closed. A display screen, which is composed of a TFT liquid crystal panel 61 for displaying a moving image, is formed on the lid portion 4, speakers 9 are disposed on the lid portion 4 below the display screen, and a touch panel 53 acting as an input device is disposed on the front surface the display screen. A DVD disc 8 acting as a recording medium of the embodiment can be accommodated in the main body on which the lid portion 4 is mounted, and various devices such as a reading device composed of a laser head unit 22 for reading out moving image information recorded on the DVD disc 8, and the like are mounted on the main body.

The DVD player 1 acting as the recording medium reproducing apparatus used in the embodiment is constructed as shown in Fig. 2 and includes a reading device 2, an image/voice creating device 3, an input device 5, a display device 6, and a controller 7.

The reading device 2 includes a disc drive unit 21, the laser head unit 22, a drive control unit 23, and a modulation/demodulation circuit 24 which are disposed in the main body. The disc drive unit 21 drives the DVD disc 8 which acts as the recording medium of the embodiment, the laser head unit 22 reads out the data recorded on the DVD disc 8 using a laser beam, the drive control unit 23 controls the operation of the disc drive unit 21 and the operation of the laser head unit 22, and the modulation/demodulation circuit 24 converts the intensity of the reflected laser beamread out by the laser head unit 22 into electric signals as well as converts the electric signals (referred to as recording signals) having been read out into ordinal digital signals because the electric signals are specially formatted to improve the recording density of the DVD disc 8.

The image/voice creating device 3 includes an image/voice processor 31 and a buffer memory 32. The data, which has been read out from the DVD disc 8 and converted into the ordinary digital signals by the modulation/demodulation circuit 24, is compressed in a predetermined data compressing algorithm. Thus, the image/voice processor 31 decomposes the compressed data so that it is arranged as image data capable of being displayed on the display device 6 as well as converts the decomposed data into voice data which can be converted into voice and the like through a D/A converter 10. The buffer memory 32 temporarily stores the data to be compressed and decompressed as well as temporarily stores the decomposed image data and the voice data.

The display device 6 used in the embodiment includes a color TFT liquid crystal panel 61 and a liquid crystal drive circuit 62. The color TFT liquid crystal panel 61 includes thin film transistors each of which is formed to correspond to each pixel so that a moving image can be reproduced as described above, and the liquid crystal drive circuit 62 is used to drive the color TFT liquid crystal panel 61. Although not shown in Fig. 2, a back light, a power supply circuit for lighting the back light, and the like are disposed on the back surface of the color TFT liquid crystal panel 61.

The speakers 9 used in the embodiment are arranged as ordinary wide band speakers capable of reproducing not only voice but also music and output voice (music) by being driven by an amplifier contained in the D/A converter 10.

While only the color TFT liquid crystal panel 61 is illustrated as the display device and only the integrated speakers 9 are illustrated as voice output devices in the embodiment, the present invention is not limited thereto, and an image (video) output and a voice (music) output may be supplied to an external display device and external speakers.

The input device 5 disposed to the DVD player 1 of the embodiment includes a main switch 51 acting as a power supply switch, the transparent touch panel 53, and a touch panel control circuit 54. The touch panel 53 permits the respective images displayed on the liquid crystal panel 61 to be selected through a finger input, and the touch panel control circuit 54 controls the operation of the transparent touch panel 53 and outputs the coordinate data input on the liquid crystal panel 61 to the controller 7 which will be described later.

The use of the transparent touch panel 53 as the input device is preferable because operability of image selection can be improved by selecting a desired image displayed through finger touch as well as a problem of disposing the input device in a limited space in a portable type reproducing apparatus as in the embodiment can be solved. However, the present invention is not limited thereto.

The controller 7 for controlling the respective components constituting the DVD player 1 of the embodiment is composed of a MPU (micro processing unit) 7 which includes an internal ROM 71 and an internal RAM 72 mounted therein. The internal ROM 71 stores a control program in which the contents of various controls such as a display image switching control and the like executed by the MPU 7 are described, and the internal RAM 72 temporarily stores data to permit the MPU 7 to execute various arithmetic operations for control and to transmit and receive data.

The DVD disc 8 used in the embodiment has a storing capacity of 2.6 gigabytes on one side, previously stores moving image data corresponding to a plurality of points of view to be described later and is used by being loaded on the disc drive unit 21.

While the DVD (digital video disc) medium is used in the embodiment because it has a relatively large storing capacity among optical discs capable of storing digital data, the present invention is not limited thereto, and any digital and analog recording medium may be used as the recording medium so long as it can record a relatively large amount of moving image information.

Next, a relationship between the display areas of reproduced images to be displayed on the color TFT liquid crystal panel 61 of the embodiment and displayed contents will be explained. In the embodiment, the display screen of the color TFT liquid crystal panel 61 is divided into five display areas 1 to 5 as shown in Fig. 3. Among the five display areas, only a display area 1 is arranged as a display area having a large region and the other four display areas 2 to 5 are arranged as display areas of the same size having a small region.

In the DVD player 1 of the embodiment, the display contents of the respective display areas 1 to 5 are set as shown in Fig. 3. That is, a display content selected by a user is displayed in the display area 1 having the large region, the front elevational image (overall image) of a recorded subject is displayed in the display area 2, the right side elevational image of the recorded subject is displayed in the display area 3, the left side elevational image of the recorded subject is displayed in the display area 4, and the front elevational image (enlarged image) of the recorded subject is displayed in the display area 5, respectively. However, since any one of the images in the display areas 2 to 5 is displayed in the display area 1, three display contents other than the display content displayed in the display area 1 are actually displayed in the display areas 2 to 5 as shown in Figs. 4a to 4d.

While it is preferable to arrange the display contents as images observed at different angles or from different points of view because moving images having a higher degree of a sense of realism can be presented to the user, the present invention is not limited thereto, and the display contents displayed in the respective display areas may not have any correlation.

The respective display contents are recorded in the DVD disc 8 as shown in Figs. 4a to 4d. That is, one image, in which the front elevational image (overall image) is displayed in the display area 1 and the other images are displayed in the display areas 3 to 5, is recorded in the DVD disc 8 as image data 1. In the same manner, one image, in which the right side elevational image is displayed in the display area 1 and the other images are displayed in the display areas 2, 4 and 5, is recorded in the DVD disc 8 as image data 2; one image, in which the left side elevational image is displayed in the display area 1 and the other images are displayed in the display areas 2, 3 and 5, is recorded in the DVD disc 8 as image data 3; and one image, in which the front elevational image (enlarged image) is displayed in the display area 1 and the other images are displayed in the display areas 2 to 4, is recorded in the DVD disc 8 as image data 4. These one images are serially disposed on the DVD disc 8 as shown in Fig. 5. In addition, a time code acting as time series data is added to the leading end of each image data and each image data is recorded in the DVD disc 8 as a frame having a predetermined bit length (however, the data is disposed as an ordinary data train having been demodulated by the modulation/demodulation circuit 24).

It is preferable to record each image data as the frame that has the time code acting as the time series data added to the leading end thereof because a time lag in image reproduction can be avoided, when image data to be read is switched, by specifying and reading image data to which time series data corresponding to the time series data to be reproduced is added. However, the present invention is not limited thereto.

Next, how the display content on the display screen of the color TFT liquid crystal panel 61 is changed when a user select an image will be explained with reference to Fig. 4. First, as shown in Fig. 4a, when the user desires to display, for example, the right side elevational image, which is displayed in the display area 3, in the display area 1 in enlargement in a state that the front elevational image (overall image) is displayed in the display area 1, the user selects the display area 3 in which the right side elevational image is displayed by touching the area 3 with a finger.

The positional coordinate, which is input by the finger touch, is detected by the transparent touch panel 53 and the touch panel control circuit 54 and then supplied to the MPU 7 as the control device.

The MPU 7 specifies the image data which corresponds to the selected display content as the image data 2 based on the coordinate data supplied thereto. Then, the MPU 7 stops reading only the frame of the image data 1 which has been executed until that time and starts to read only the frame of the image data 2 which corresponds to a reproduction time code at that time as shown in Fig. 5.

With this operation, the image data 2 is displayed such that the right side elevational image is displayed in the display area 1 having the large region as well as the front elevational image (overall image) is displayed in the display area 2, the left side elevational image is displayed in the display area 4, and the front elevational image (enlarged image) is displayed in the display area 5 as shown in Fig. 4b. Accordingly, the user recognizes as if the image in the selected display area 2 is displayed in enlargement. These functions can be provided by the ordinary DVD player 1 using only one set of an image creating device having an ordinary reproduction speed at a less expensive cost without increasing the reproducing speed of the image creating device and without using a plurality of the image creating devices.

Further, when the user selects the other display areas 3 to 5, similar processing will be carried out and the images displayed in these display areas are changed as shown in Figs. 4c, 4d and 4a.

While the recording medium reproducing apparatus of the present invention has been described above in detail as to the above-described embodiment with reference to the accompanying drawings, the present invention is by no means limited to the embodiment and it goes without saying that various modifications and additions can be made within the range which does not depart from the gist of the invention.

When, for example, a frame to be read is selected to change data to be read, a frame having a corresponding time code is read. However, the present invention is not limited thereto, and when images are decompressed using a plurality of continuous image data, reading of image data may be started from a frame which is pushed forward from a corresponding time code by a predetermined period of time.

Further, while the frames of the respective kinds of image data are serially recorded in the embodiment, the present invention is not limited thereto and the image data may be recorded in any optional recording format. For example, each frame may be recorded on each data track which is preset to each kind of image data.

The present invention will achieve the following advantages.
(a) According to the present invention, each of a plurality of kinds of image data for one image that is displayed on the display device is previously arranged as image data including display contents to be displayed in the large region of the display device and display contents to be displayed in the small regions thereof. Further, the display contents that are displayed in a small region in a kind of image data and displayed in the large region in another kind of image data have the same time series on the recording medium on which they are recorded. Therefore, the display area of an image can changed from a small region to the large region in response to, for example, the selection of the user only by reading the image data corresponding to the image and ordinarily creating and reproducing the image from the thus read image data. As a result, the recording medium reproducing apparatus having these functions can be provided at the less expensive cost without increasing the processing speeds of the moving image information reading device and the image creating device (LSI) and without providing a plurality of sets of these devices.
(b) According to the present invention, operability can be improved when the user selects an image which he or she desires to display in the large region.
(c) According to the present invention, when image data to be read is switched, the occurrence a time lag can be avoided in image reproduction by specifying image data to which time series data corresponding to the image data to be reproduced is added.
(d) According to the present invention, an image having a higher degree of a sense of realism can be presented to the user.

## Claims

1. A recording medium reproducing apparatus (1) for reproducing moving image information comprising a recording medium (8) on which the moving image information composed of image data that is at least continuous in time sequence is recorded, reading means (2) for reading out at least the image data from the recording medium, image creation means (3) for creating a reproduced image based on the image data, and display means (6) for displaying the thus created image, **characterized in that** the image data is composed of at least two kinds of image data each kind of which corresponds to one image including at least display contents that are displayed in a large region on the display means (6) and display contents that are displayed in small regions on the display means (6), the display contents that are displayed in a small region in a kind of image data and displayed in the large region in another kind of image data have the same time series, and at least the two kinds of the image data are switched by switch means (7) so as to be displayed on the display means (6).

2. A recording medium reproducing apparatus according to claim 1, **characterized in that** the switch means (7) selects the position where display contents are displayed in a small region on the display means so as to switch the image data of the display contents at the selected position to the image data of the display contents that is to be displayed in the large region.

3. A recording medium reproducing apparatus according to claim 1 or 2, **characterized in that** time series data is added to the leading end of each kind of the image data.

4. A recording medium reproducing apparatus according to any of claims 1 to 3, **characterized in that** the display contents in the respective regions are images of the same subject recorded at a different angle or from a different point of view.
